# EUROPEAN PATENT APPLICATION

(11) **EP 3 264 739 A1**
(43) Date of publication of application: **03.01.2018**
(21) Application number: 16176634.0
(22) Date of filing: 28.06.2016
(51) Int. Cl.: H04N 5/225

(54) **IMAGING APPARATUS**

(71) Applicant: Soil Machine Dynamics Limited, Tyne and Wear NE28 6UZ (GB)
(72) Inventor: WAKEHAM, Dale, Wallsend, Newcastle upon Tyne, NE28 6UZ (GB)
(74) Representative: Vinsome, Rex Martin

(57) **Abstract**

An imaging apparatus (6) is disclosed. The apparatus comprises a housing (20), a plurality of video cameras (38) located in the housing for receiving light entering the housing from different directions and a chassis (32) for mounting the video cameras in position in the housing. A cable (10) enables electrical power to be received from an electrical power source remote from the apparatus to supply electrical power to the video cameras, and electrical signals to be communicated to a location remote from the apparatus.

## Description

The present invention relates to an imaging apparatus, and relates particularly, but not exclusively, to a 360° field of view video camera for underwater use.

Remotely operated vehicles (ROVs) for carrying out underwater work, for example burying cables in the seabed, are provided with underwater video cameras for enabling an operator on a surface vessel to identify obstacles or other objects in the vicinity of the ROV. There has for some time been a requirement for an underwater video camera that can provide video images having a wide field of view around the ROV.

It is known to provide ROVs with pan and tilt video cameras, in which a single video camera can pivot about two mutually orthogonal axes to vary its field of view. However, such known cameras suffer from the drawback that they are large in size, have several moving parts, which can limit reliability, especially when used underwater at significant depths, and can only view (and therefore only zoom in) on a single view at a single time. In addition, such cameras require a considerable time to move from one field of view to another.

Another known wide field of view underwater camera is provided by 360Heros Inc. under the name 360 ABYSS, which provides a plurality of cameras providing video images from different views simultaneously. However, this known camera suffers from the drawback that it records images using an internal memory, the data being processed subsequently, and therefore does not provide a real-time video output. This therefore means that the apparatus cannot be used in real time to monitor operation of a ROV. In addition, the depth at which it can operate is limited.

Preferred embodiments of the present invention seek to overcome the above disadvantage of the prior art.

According to an aspect of the present invention there is provided an imaging apparatus comprising:-
a housing;
a plurality of image detector devices located in said housing, wherein a plurality of said image detector devices are adapted to receive light entering the housing through at least one respective optically transmissive part of said housing and to output an electrical signal dependent on said received light, wherein a plurality of said image detector devices are adapted to receive light entering said housing from different respective directions;
mounting means for mounting a plurality of said image detector devices in position in said housing;
power communication means for enabling electrical power to be received from an electrical power source remote from the apparatus to supply electrical power to said image detector devices; and
signal communication means for enabling said electrical signals to be communicated to a location remote from said apparatus.

By providing a plurality of image detector devices located in the housing and having different fields of view, this provides the advantage of enabling several views to be obtained simultaneously, while also enabling the apparatus to zoom in on more than one view simultaneously. The advantage is also provided that reliability of the apparatus is improved by reducing the number of moving parts. By providing power communication means for enabling electrical power to be received from an electrical power source remote from the apparatus to supply electrical power to the image detector devices, and signal communication means for enabling the electrical signals to be communicated to a location remote from the apparatus, this provides the advantage of enabling at least some image processing and/or data processing electronics and the power supply to be located outside of the housing, thereby reducing the amount of heat generated within the housing. This in turn provides the advantage of enabling the image detector devices to be located closer together, thereby enabling better optical imaging, and improving reliability of the apparatus, enabling it to operate at greater depths. By providing signal communication means for enabling the electrical signals to be communicated to a location remote from the apparatus, this provides the further advantage of enabling a real-time video output to be provided, thereby enabling the apparatus to monitor operation of a remotely operated vehicle (ROV) in real time.

The mounting means may be adapted to mount a plurality of image detector devices in thermally conducting contact with the housing.

This provides the advantage of enabling heat to be directly dissipated to the housing, thereby preventing overheating of the apparatus. In the case of underwater use, this enables the heat to be conducted from the housing to the surrounding water. The materials of the mounting means and housing can be chosen so that heat is more easily conducted from the image detector devices to the housing than between the image detector devices.

At least one said image detector device may be in thermally conducting contact with the housing by means of thermally conducting paste.

At least one said image detector device may be in thermally conducting contact with said housing in a region adjacent a said optically transmissive part of said housing.

This provides the advantage of enabling heat to be transmitted to the parts of the housing having higher thermal conductivity (since the optically transmissive parts of the housing are likely to have lower thermal conductivity), thereby improving heat dissipation and improving the reliability of the apparatus.

The mounting means may be adapted to engage at least one said image detector device at an edge region thereof.

This provides the advantage of reducing heat transfer between image detector devices, thereby improving the reliability of the apparatus.

The apparatus may further comprise at least one lens for directing light into said housing to at least one said image detector device, and least partially occupying a respective said optically transmissive part of said housing.

This provides the advantage of enabling the field of view of the image detecting devices to be improved by choice of suitable lenses, such as fish eye lenses, while also enabling the housing to be made more compact, which in turn enables it to be made stronger for underwater applications.

The apparatus may further comprise at least one removable protective cover for at least one said lens, wherein said cover can be removed without providing access to the interior of said housing.

This provides the advantage of enabling damaged or scratched protective covers to be replaced, while minimising the risk of tampering with devices inside the housing.

The apparatus may further comprise at least one removable plate for locating a said protective cover in position on said housing.

The apparatus may further comprise transformer means for receiving electrical power via said power communication means for supplying electrical power to said image detector devices.

The transformer means may be located remotely from the housing.

This provides the advantages of enabling the size of apparatus to be reduced and heat dissipation in the apparatus to be further reduced.

The signal communication means may comprise at least one electrical cable.

The apparatus may further comprise convertor means located outside of said housing for converting said electrical signals into optical signals.

This provides the advantage of enabling data to be more easily sent to a remote operator such as an operator in a surface vessel.

A plurality of said electrical signals may represent video data.

The apparatus may further comprise signal processor means located outside of said housing for processing said electrical signals.

This provides the advantage of reducing the amount of electronics in the housing, thereby reducing the amount of heat generated in the housing. This in turn improves the reliability of the apparatus.

According to another aspect of the present invention, there is provided a remotely operated vehicle having a body and at least one imaging apparatus as defined above mounted to said body.

A preferred embodiment of the invention will now be described, by way of example only and not in any limitative sense, with reference to the accompanying drawings, in which:-
Figure 1 shows an exploded perspective view of an imaging apparatus embodying the present invention;
Figure 2 shows a side cross sectional view of the apparatus of Figure 1;
Figure 3 shows a schematic view of the apparatus of Figure 1 together with a separately located media handling pod; and
Figure 4 shows a schematic view of a remotely operated vehicle incorporating the apparatus of Figure 1.

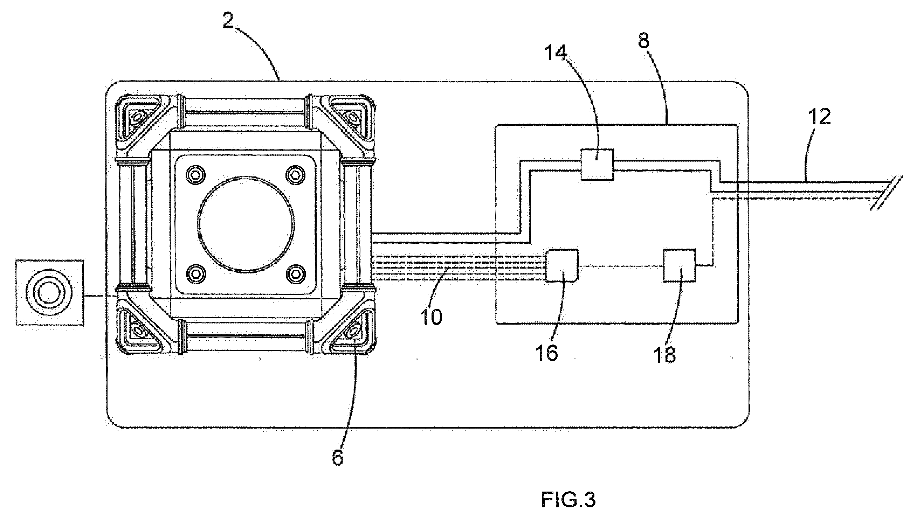

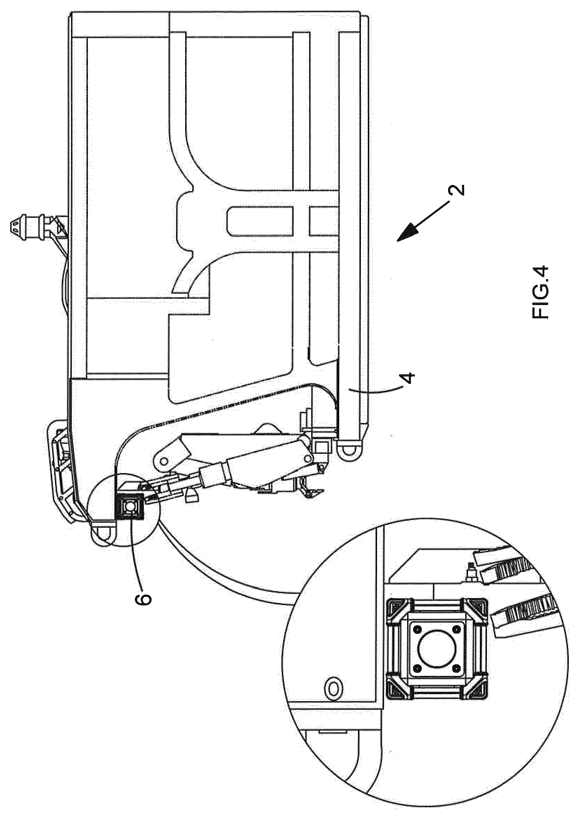

Referring to Figure 4, a remotely operated vehicle (ROV) 2 has a body 4 supporting an imaging apparatus in the form of an underwater video camera 6 embodying the present invention, and a media handling pod 8 (Figure 3), located separately from the camera 6, and connected to the camera 6 by means of a multicore cable 10 carrying electrical video signals and electrical power. The cable 10 has twelve cores, and electrical video signals for each of five video cameras 38 provided in camera 6 (and which will be described in greater detail below) are transmitted on two cores of the cable 10. The remaining two cores of the cable 10 are used to connect positive and negative lines of a d.c. electrical power supply from a power transformer 14 (Figure 3) to the camera 6. The media handling pod 8 is also connected via an umbilical cable 12 to a control cabin on a surface vessel (not shown), the cable 12 enabling electrical power to be supplied to the ROV 2 and an optical fibre cable for enabling video data generated by the camera 6 to be supplied to the surface vessel.

The media handling pod 8 contains power transformer 14 for receiving electrical power via the umbilical cable 12 and supplying electrical power via the multicore cable 10 to the camera 6, a HD-TVI fibre converter 16, for converting electrical signals received from the camera 6 via the multicore cable 10 in HD-TVI format and converting the signals into optical signals, and a multiplexer 18 for receiving the optical signals from the fibre converter 16 and corresponding optical signals from any other cameras 6 mounted to the ROV 2, and supplying the optical signals via the umbilical cable 12 to the surface vessel.

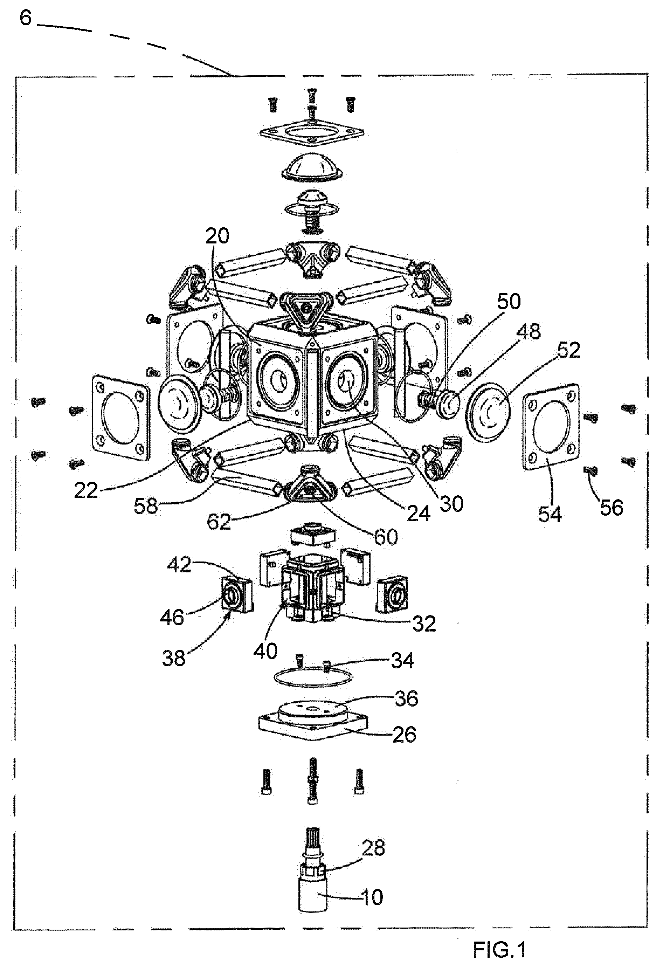

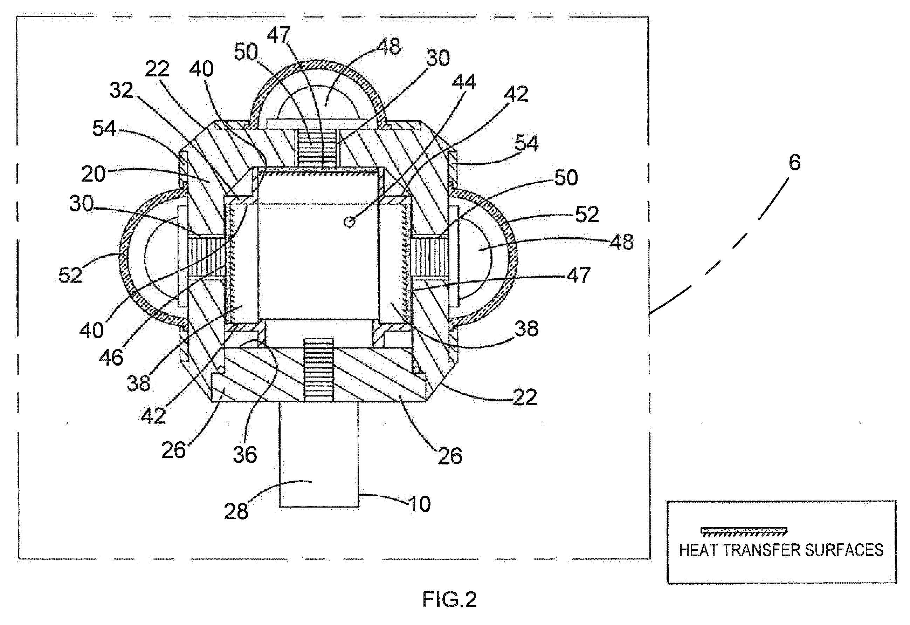

Referring now to Figures 1 and 2, the camera 6 includes a housing 20 of thermally conductive material such as stainless steel and of generally cubic construction having chamfered corner regions 22. The housing 20 has an opening 24 on one side, the opening 24 being sealable by means of a cap 26. A 12-pin bulkhead connector 28 enables the camera 6 to be connected to the multicore cable 10 to enable electrical power to be supplied to the camera 6 along two of the cores of the cable 10 and data communication for each video camera 38 in the housing 20 to be carried out along two cores of the cable 10 to the media handling pod 8. The other faces of the housing 20 are provided with optically transmissive parts in the form of apertures 30.

Mounting means in the form of an internal chassis 32 formed by 3D printing of plastics material of low thermal conductivity is mountable by means of screws 34 to an internal face 36 of the cap 26 and receives an image detector device in the form of one of the CCD video cameras 38 in a respective recess 40 provided in each of its side faces and its top face. The chassis 32 engages each video camera 38 around an edge region 42 thereof to minimise heat conduction into the chassis 32, thereby minimising conduction of heat generated by one video camera 38 to the other video cameras 38. Each video camera 38 has a coaxial connector 44 (Figure 2) for outputting electrical video signals to the bulkhead connector 28.

The video cameras 38 are mounted so that their optical inputs 46 are aligned with the respective apertures 30 in the housing 20, while the video cameras 38 are in thermal contact with the respective internal faces of the housing 20 in the region surrounding the apertures 30 by means of thermally conductive paste (not shown) located between the video cameras 38 and the housing 20, so that a heat transfer surface 47 is provided adjacent each video camera 38. The housing 20 is made of suitable metal such as stainless steel, having high thermal conductivity compared with the thermal conductivity of the internal chassis 32. In this way, the video cameras 38 receive light entering the housing 20 through the respective apertures 30 and receive electrical power from the bulkhead connector 28, and emit electrical video signals via the bulkhead connector 28. Each of the video cameras 38 is provided with a limited amount of processing electronics, in order to minimise heat generation in the interior of the housing 20, and by means of the HD-TVI signal processing protocol, which will be familiar to persons skilled in the art, the electrical outputs of each of the five video cameras 38 in the housing 20 can be output via two of the cores of the multicore cable 10 connected to the bulkhead connector 28. The video cameras 38 are also supplied with electrical power via two cores of the multicore cable 10 and bulkhead connector 28. In this way, heat generation in the interior of the housing 20 is minimised, and heat dissipation is maximised via conduction across the heat transfer surfaces 47 through the housing 20 to the water surrounding the housing 20.

A fisheye lens 48 having an elongate stem 50 located in each aperture 30 directs light from a wide field of view into the apertures 30 to the optical inputs 46 of the video cameras 38. The lenses 48 are protected by protective covers 52 of suitable hardwearing material such as acrylic. The protective covers 52 are held in position by removable securing plates 54 secured to the housing 20 by screws 56, so that the protective covers 52 can be replaced when damaged or scratched, without allowing access to the interior of the housing 20.

A protective cage 58 for minimising damage to the protective covers 52 and bulkhead connector 28 is secured to the housing 20 by means of bolts 60 securing chamfered corners 62 of the cage 58 to respective chamfered corners 22 of the housing 20.

The operation of the ROV 2 shown in the Figures will now be described.

When the ROV 2 reaches its working depth by being lowered from a vessel on the surface, electrical power is supplied via the umbilical cable 12 to the media handling pod 8. The electrical power is converted via the power transformer 14 in the media handling pod 8 to a suitable voltage and is supplied to the video cameras 38 inside the housing 20 of the camera 6 via multicore cable 10 and bulkhead connector 28. Light received via the lenses 48 is input to the video cameras 38, which output real-time electrical video signals in HD-TVI format via their coaxial connectors 44 to respective conductors of the bulkhead connector 28 and the multicore cable 10 to the HD-TVI fibre converter 16 in the media handling pod 8. The real-time video signals are converted by the converter 16 to optical signals having 2 wavelengths, and these are then integrated with signals from other cameras 6 on the ROV 2 by the multiplexer 18 in the media handling pod 8, and supplied via the umbilical cable 12 to the operator cabin in the surface vessel, where the signals can be processed to supply real-time video images. At the surface, the five individual video signals are combined by suitable software (a process known to person skilled in the art as stitching) to provide a 360° x 135° spherical video feed of the underwater environment.

Heat generated by the video cameras 38 in the housing 20 of camera 6 is preferentially transmitted outwards via thermal contact between the video cameras 38 and the housing 20, via the thermally conductive paste, into the water surrounding the housing 20.

It will be appreciated by persons skilled in the art that the above embodiment has been described by way of example only and not in any limitative sense, and that various alterations and modifications are possible without departure from the scope of the invention as defined by the appended claims.

## Claims

1. An imaging apparatus comprising:-
a housing;
a plurality of image detector devices located in said housing, wherein a plurality of said image detector devices are adapted to receive light entering the housing through at least one respective optically transmissive part of said housing and to output an electrical signal dependent on said received light, wherein a plurality of said image detector devices are adapted to receive light entering said housing from different respective directions;
mounting means for mounting a plurality of said image detector devices in position in said housing;
power communication means for enabling electrical power to be received from an electrical power source remote from the apparatus to supply electrical power to said image detector devices; and
signal communication means for enabling said electrical signals to be communicated to a location remote from said apparatus.

2. An apparatus according to claim 1, wherein the mounting means is adapted to mount a plurality of image detector devices in thermally conducting contact with the housing.

3. An apparatus according to claim 2, wherein at least one said image detector device is in thermally conducting contact with the housing by means of thermally conducting paste.

4. An apparatus according to claim 2 or 3, wherein at least one said image detector device is in thermally conducting contact with said housing in a region adjacent a said optically transmissive part of said housing.

5. An apparatus according to any one of the preceding claims, wherein the mounting means is adapted to engage at least one said image detector device at an edge region thereof.

6. An apparatus according to any one of the preceding claims, further comprising at least one lens for directing light into said housing to at least one said image detector device, and least partially occupying a respective said optically transmissive part of said housing.

7. An apparatus according to claim 6, further comprising at least one removable protective cover for at least one said lens, wherein said cover can be removed without providing access to the interior of said housing.

8. An apparatus according to claim 7, further comprising at least one removable plate for locating a said protective cover in position on said housing.

9. An apparatus according to any one of the preceding claims, further comprising transformer means for receiving electrical power via said power communication means for supplying electrical power to said image detector devices.

10. An apparatus according to claim 9, wherein the transformer means is located remotely from the housing.

11. An apparatus according to any one of the preceding claims, wherein the signal communication means comprises at least one electrical cable.

12. An apparatus according to any one of the preceding claims, further comprising convertor means located outside of said housing for converting said electrical signals into optical signals.

13. An apparatus according to any one of the preceding claims, wherein a plurality of said electrical signals represent video data.

14. An apparatus according to any one of the preceding claims, further comprising signal processor means located outside of said housing for processing said electrical signals.

15. A remotely operated vehicle having a body and at least one imaging apparatus according to any one of the preceding claims mounted to said body.
